# EUROPEAN PATENT SPECIFICATION

(11) **EP 1 401 287 B1**
(45) Date of publication and mention of the grant of the patent: **21.01.2009**
(21) Application number: 02751611.1
(22) Date of filing: 03.07.2002
(51) Int. Cl.: A23C 19/097, A23L 3/015

(54) **PROCESS FOR PASTEURIZING CHEESE PRODUCTS, AND CHEESE PRODUCTS FORMED THEREBY**
VERFAHREN ZUR HERSTELLUNG VON KÄSEPRODUKTEN, UND KÄSEPRODUKTE HERGESTELLT NACH DIESEM VERFAHREN
PROCEDE DESTINE A PASTEURISER DES PRODUITS FROMAGERS, ET PRODUITS FROMAGERS AINSI OBTENUS

(30) Priority: 03.07.2001 WO PCT/IT01/00352
(43) Date of publication of application: 31.03.2004
(73) Proprietor: S.p.A. Egidio Galbani, 20066 Melzo (IT)
(72) Inventor: KREILINGER, Clemens, c/o S.p.A. Egidio Galbani, 20066 Melzo, Milano (IT)
(74) Representative: Long, Giorgio
(86) International application number: PCT/IT2002/000438
(87) International publication number: WO 2003/003845

(56) References cited:
- DRAKE M A ET AL: "High Pressure Treatment of Milk and Effects on Microbiological and Sensory Quality of Cheddar Cheese" JOURNAL OF FOOD SCIENCE, INSTITUTE OF FOOD TECHNOLOGISTS. CHICAGO, US, vol. 62, no. 4, 1997, pages 843-845,860, XP002166808 ISSN: 0022-1147
- FELIPE X ET AL: "COMPARISON OF THE EFFECTS OF HIGH-PRESSURE TREATMENTS AND HEAT PASTEURIZATION ON THE WHEY PROTEINS IN GOAT S MILK" JOURNAL OF AGRICULTURAL AND FOOD CHEMISTRY, AMERICAN CHEMICAL SOCIETY. WASHINGTON, US, vol. 45, no. 3, 1 March 1997 (1997-03-01), pages 627-631, XP000683365 ISSN: 0021-8561
- TRUJILLO A J ET AL: "Application of high pressure treatment for cheese production." FOOD RESEARCH INTERNATIONAL 34 (3/4) 311-316 2000 TEC. DELS ALIMENTS, CENT. DE REFERENCIA EN TEC. DELS ALIMENTS (CERTA), FAC. DE VET., UNIV. AUTONOMA DE BARCELONA, 08193, BELLATERRA, SPAIN. TEL. +34-3-581-447. FAX. +34-3-581-2006. E-MAIL TONI.TRU, XP002228451
- GARCIA-GRAELLS ET AL.: "INACTIVATION OF ESCHERICHIA COLI IN MILK BY HIGH HYDROSTATIC PRESSUR TREATMENT IN COMBINATION WITH ANTIMICROBIAL PEPTIDES" JOURNAL OF FOOD PROTECTION, vol. 62, no. 11, 1999, pages 1248-1254, XP009004624
- GERVILLA R ET AL: "EFFECT OF HIGH HYDROSTATIC PRESSURE ON ESCHERICHIA COLI AND PSEUDOMONAS FLUORESCENS STRAINS IN OVINE MILK" JOURNAL OF DAIRY SCIENCE, AMERICAN DAIRY SCIENCE ASSOCIATION. CHAMPAIGN, ILLINOIS, US, vol. 80, no. 10, 1 October 1997 (1997-10-01), pages 2297-2303, XP000724108 ISSN: 0022-0302
- LOPEZ-FANDINO R ET AL: "THE EFFECTS OF HIGH PRESSURE ON WHEY PROTEIN DENATURATION AND CHEESE-MAKING PROPERTIES OF RAW MILK" JOURNAL OF DAIRY SCIENCE, AMERICAN DAIRY SCIENCE ASSOCIATION. CHAMPAIGN, ILLINOIS, US, vol. 79, no. 6, 1 June 1996 (1996-06-01), pages 929-936, XP000620044 ISSN: 0022-0302
- DATABASE FSTA [Online] INTERNATIONAL FOOD INFORMATION SERVICE (IFIS), FRANFURT/MAIN, DE; GERVILLA R ET AL: "Sensitivity of Staphylococcus aureus and Lactobacillus helveticus in ovine milk subjected to high hydrostatic pressure." Database accession no. 1999-00-p1558 XP002228452 & JOURNAL OF DAIRY SCIENCE 82 (6) 1099-1107 1999 UNITAT DE TEC. DELS ALIMENTS (CERTA), FAC. DE VET., UNIV. AUTONOMA DE BARCELONA, 08193 BELLATERRA, BARCELONA, SPAIN,
- DATABASE BIOSIS [Online] BIOSCIENCES INFORMATION SERVICE, PHILADELPHIA, PA, US; 1996 CAPELLAS MARTA ET AL: "Populations of aerobic mesophiles and inoculated E. coli during storage of fresh goat's milk cheese treated with high pressure." Database accession no. PREV199699085883 XP002228453 & JOURNAL OF FOOD PROTECTION, vol. 59, no. 6, 1996, pages 582-587, ISSN: 0362-028X
- RADEMACHER B ET AL: "MIT 10.000 BAR ZU NEUEN MILCHPRODUKTEN?" DMZ. LEBENSMITTELINDUSTRIE UND MILCHWISSENSCHAFT, VOLKSWIRTSCHAFTLICHER VERLAG GMBH. MUNCHEN, DE, vol. 117, no. 22, 31 October 1996 (1996-10-31), pages 1035-1039, XP000630098 ISSN: 0938-9369
- CHEFTEL J.C.: "APPLICATIONS DES HAUTES PRESSIONS EN TECHNOLOGIE ALIMENTAIRE" ACTUALITES DES INDUSTRIES ALIMENTAIRE ET AGRO-ALIMENTAIRE, vol. 108, 1991, pages 141-153, XP000563565

## Description

The present invention relates to a process for pasteurizing dairy products, using the high hydrostatic pressure method.

There are various known methods of sterilizing or pasteurizing food products. Heat treatment is clearly the most conventional process, although it is known to cause undesirable changes in the sensory or nutritional properties of food. Moreover, if thermal pasteurization is carried out on food already packaged in containers - a comparatively advantageous method for ensuring greater sterility of the food without the need for treatment in suitable sterile chambers - the container must be able to withstand the pasteurization temperature. The choice of packaging therefore becomes a highly critical and limiting factor.

More recently, alternatives to thermal sterilization or pasteurization have been proposed in order to overcome the drawbacks of the heat treatment described above, these alternatives being designed to obviate the use of processes causing irreversible denaturing of the product. For example, the use of pulsating electrical fields, magnetic fields and microwaves has been proposed, as has the use of high hydrostatic pressure. The application of high pressure induces morphological changes in the cells of microorganisms, which may be sufficient to rupture the cell membrane and thus cause the death of the microorganisms. The efficiency and quality of the pasteurization achieved by a high pressure treatment depend on various factors, including the level of pressure and the temperature to which the food is subjected, the processing time, and the type of pressure/decompression cycle used, if applicable.

Trujillo A. J. et al., Food Res. Intern. 34 W(3/4) 311-316, 2000 discloses high pressure treatment of cheese, wherein the cheese is treated for 5-10 minutes.

Capellas Marta et al., Database Biosis, XP002228453 Database Accession No. PREV199699085883 pertains to a study of populations of aerobic mesophiles and inoculated E. coli during storage of fresh goat's milk cheese treated with high pressure for 5, 10 and 15 minutes.

It should be noted in this connection that, owing to the adiabatic compression of the fluid in which the product to be pasteurized under high pressure is immersed, the fluid temperature will tend to increase by 4°C for every 1000 bars of pressure. Consequently, if pressures in excess of 4000-5000 bars are applied, the temperature in the compression chamber may rise by 16-20°C or more above the initial level. Thus this factor may also have a drastic effect on the outcome of the process. Indeed, although on the one hand a rise in temperature can accelerate pasteurization and thus shorten the treatment time, on the other hand the high temperature may cause a degradation of the quality of the product.

It is evident from the above that the selection of an appropriate pasteurization process for a food product is an operation which generally requires a considerable number of trials, for the purpose of identifying the optimal conditions in which the food reaches the requisite degree of pasteurization without any changes in its qualitative properties.

This is particularly the case where the food product to be treated is a dairy product, particularly a cheese. It is known that a considerable part of the aroma and flavour of many cheeses is determined by the presence of microorganisms such as moulds and the like. Examples of such cheeses are Gorgonzola and Roquefort, in which the blue veins are due to the presence of *Penicillium Roqueforti,* Brie (*Geotricum Candidum*) and Camembert (*Penicillium Camemberti*). However, many other cheeses, such as Taleggio, also have their most characteristic element in their rinds, in which specific microorganisms are developed during the maturing process.

Clearly, a process of pasteurizing cheese, which is desirable if the requisite hygiene is to be provided for the consumer, must, as far as possible, keep alive the microorganisms responsible for the essential sensory characteristics of the cheese.

Accordingly, the problem which the present invention is intended to resolve is that of providing a process for pasteurizing cheese products which meets the above requirements, in other words one which maintains an ideal balance between the hygiene of a product and the preservation of its sensory and nutritional characteristics.

This problem is resolved by a process as outlined in the attached claims.

In the method according to the present invention, the cheese product is treated at a pressure in the range from 5000 to 6000 bars and at an initial temperature in the range from 0°C to 25°C, preferably from 3°C to 15°C. More preferably, the cheese is treated at a pressure of approximately 6000 bars and a temperature of approximately 4°C.

The high pressure treatment is continued for a period ranging from 2 minutes to 10 minutes, depending on the pressure and temperature applied. In the case of the preferred conditions of pressure (6000 bars) and temperature described above, an optimal treatment time is 2-4 minutes.

The process according to the present invention comprises the stages of operation as disclosed in the appended claims.

To ensure that the desired temperature indicated for stage c) is reached during the compression stage, the compression chamber, the filling fluid and the product must initially be maintained by thermostatic means at an operating temperature of approximately 4°C. For example, in the case of pasteurization carried out at 6000 bars and 4°C, the compression chamber, the filling fluid and the product will be maintained by thermostatic means at 4°C.

A suitable machine for carrying out the process according to the present invention is the QFP 351-600 autoclave marketed by Flow Italia s.r.1.

A preferred packaging material is selected from the group comprising polyethylene, polyethylene terephthalate, and polystyrene, used individually or in multi-layer form. A multi-layer foil of plastic material can also comprise a sheet of aluminium. Particularly suitable plastic materials are coextruded multi-layer polyolefin heat-shrink materials, preferably the Cryovac^{®} plastic material made by Sealed Air Corp.

The packaging is of the vacuum type. A vacuum of the type normally used in the packaging of food products requiring it will generally be sufficient. This is because it has been found that some cheese products, in particular, are highly sensitive to a rise in temperature, tending to melt rapidly. Typical examples of such products are cream cheeses such a Mascarpone or products containing such cheeses such as the known Gorgonzola-Mascarpone combination. Since air is a compressible fluid, it tends to heat up considerably in the treatment conditions required by the present process, thus raising the temperature well above the softening or melting point of the cheese product.

It should be noted that the use of heat-shrink materials such as Cryovac^{®} allows the material to adhere fully to the product, thus essentially minimizing the voids present between the product and the packaging.

The process according to the invention is applied to a product containing a cream cheese in combination with a blue-veined cheese.

By way of example, the process according to the invention was carried out on a composite layered cheese product specimen consisting of a combination of Gorgonzola and Mascarpone (Magor, made by Galbani). The product was vacuum-packaged in Cryovac^{®} BB 755 food-grade plastic material.

The process was carried out as described above, the pressure being raised to approximately 6000 bars over a period of 2-10 minutes (depending on the specimens), this pressure being maintained for approximately 2 minutes. The initial temperature was approximately 4°C, and the temperature rose as a result of adiabatic heating to approximately 32°C.

The product specimens treated in this way were then subjected, immediately after treatment or after storage for 30 or 60 days, to a series of experimental tests designed to determine their keeping quality and to discover any modifications caused by the high pressure treatment.

Each specimen was dispersed in a phosphate buffer solution at pH 6.8 and was subjected to a test of susceptibility to proteolytic action in the presence of the enzyme pancreatin, to simulate the process of in vivo digestion of the product. After 16 hours of vigorous stirring at 37°, the degree of proteolysis was determined by measuring the absorbance at 280 nm in the supernatant phase formed by precipitation with 10% trichloroacetic acid. The experiment was conducted both on a specimen treated by the process according to the invention (specimen B) and on an untreated specimen of Magor (specimen A). The results are shown in Table I.

**Table I**

| specimen | Change in absorbance (280 nm) after incubation with pancreatin |
|---|---|
| A | 0.010 |
| B | 2.785* |

| | |
|---|---|
| * Determination based on 5x diluted specimen | |

Specimen B (treated at high hydrostatic pressure) shows a markedly greater susceptibility to proteolytic action. This indicates that the high pressure treated product is more digestible than the untreated product.

Further product specimens treated according to the process of the invention were subjected to determination of the soluble proteins. Some specimens were analysed immediately after their preparation and the high pressure treatment, while other specimens were stored for 30 days and for 60 days. In this case also, the products treated by the process according to the invention (specimens B) were compared with untreated products (specimens A). Before the determination, the product specimens were dispersed in a phosphate buffer solution at pH 6.8 and the dispersion was then centrifuged to eliminate the lipid fraction (the protein fraction remained in solution). The suspension formed in this way was then acidified to pH 4.6 by the addition of 10% v/v acetic acid and the insoluble proteins were removed by centrifuging (10,000 r.p.m. for 15 minutes at 2°C). The supernatant phase was concentrated by ultrafiltration with a nominal cut-off of 5000 daltons up to a factor of 20.

The protein content of the specimens was determined by the Bradford colorimetric method (a spectrophotometric method based on the colorimetric complex formed between hydrophobic residues of a protein and Coomassie Blue G-250 dye). The protein concentration was expressed with reference to a calibration straight line obtained by using bovine serum albumin as a marker protein. The results of the determinations are shown in Table II.

**Table II**

| Specimen | Soluble protein fraction, mg/g of original material | | | | | |
|---|---|---|---|---|---|---|
| | Start of storage | | 30 days | | 60 days | |
| | Phosphate | Urea, DTT | Phosphate | urea, DTT | phosphate | urea, DTT |
| A | 18.9 | 32.5 | 2.4 | 3.3 | 1.5 | 1.9 |
| B | 10.9 | 19.6 | 6.1 | 8.8 | 2.3 | 3.4 |

The experimental data show that there is a marked decrease (approximately 90%) of soluble proteins after only 30 days' storage in specimen A (untreated). In specimen B (high pressure treated), the decrease in soluble proteins after 30 days of storage is approximately 50%.

This shows that specimen B, treated by the process according to the invention, shows fewer changes in protein content due to storage. This indicates that the product treated by the process according to the invention has better keeping qualities than the untreated product.

The process according to the present invention enables a degree of pasteurization of a cheese product to be achieved in accordance with the necessary requirements of hygiene, without essentially compromising the content of characteristic microorganisms such as moulds, which contribute to the typical flavour of many cheeses. The experiments which were conducted demonstrated that, at higher pressures and temperatures than those used in the present process, the content of beneficial microorganisms in the cheese was reduced to unacceptable levels, such that the sensory and nutritional properties of the cheese were irreversibly altered. Conversely, more moderate pressure and temperature conditions did not provide sufficient hygiene of the food.

The inventors of the present invention have also surprisingly discovered that, as shown by the experimental data discussed above, the treatment of cheese products at high hydrostatic pressure imparts particularly advantageous properties to these products. In particular, the cheese products that can be formed by means of the high hydrostatic pressure process described herein are characterized by improved digestibility and keeping qualities by comparison with the identical untreated product.

Clearly, a person skilled in the art will be able to adapt the process described above to meet particular requirements, without thereby departing from the scope of the present invention as defined in the attached claims.

## Claims

1. Process for pasteurizing dairy products, in which the said dairy product is a composite product comprising a combination of a cream cheese and a blue-veined cheese and in which the said dairy product is vacuum-packaged in films or trays of a heat-shrink material, comprising the following stages of operation:
a) Placing the dairy product, in the fluid-filled compression chamber of a machine for high hydrostatic pressure treatment, and then sealing the compression chamber,
b) Raising the pressure within the said compression chamber for a period of 2-4 minutes until a pressure in the range from 4000 bars to 6000 bars is reached,
c) Maintaining the pressure within the said compression chamber for a period of 2-4 minutes at a temperature of approximately 4°C,
d) Decompressing to atmospheric pressure, opening the compression chamber and removing the said dairy product.

2. Process according to Claim 1, in which the said pressure is approximately 6000 bars.

3. Process according to any one of Claims 1 to 2, in which the said films or trays are made of a material selected from the group comprising polyethylene, polyethylene terephtalate and polystyrene, alone or in multi-layer combinations, possibly comprising a sheet of aluminium.

4. Process according to Claim 3, in which the said material is a coextruded multi-layer heat-shrink polyolefin.

5. Process according to Claim 4, in which the said coextruded multi-layer polyolefin heat-shrink material is Cryovac^{®} BB 755 food-grade plastic material.

6. Dairy product obtainable by the process outlined in any one of Claims 1 to 5, in which the said dairy product is a composite product comprising a combination of a cream cheese and a blue-veined cheese.

7. Dairy product according to Claim 6, in which the said dairy product is a composite product comprising a combination of Mascarpone and Gorgonzola.

## Patentansprüche

1. Verfahren zum Pasteurisieren von Molkereiprodukten, in weichem das Molkereiprodukt ein zusammengesetztes Produkt ist, das eine Kombination aus einem Frischkäse bzw. Rahmkäse und einem Blauschimmelkäse umfasst, und in weichem das Molkereiprodukt in Folien oder Schalen aus einem durch Wärme schrumpfbaren Material vakuumverpackt ist, umfassend die folgenden Arbeitsschritte:
a) Einbringen des Molkereiprodukts in die fluidgefüllte Kompressionskammer einer Maschine für eine Behandlung unter hohem hydrostatischem Druck und anschließend Verschließen der Kompressionskammer,
b) Erhöhen des Drucks in der besagten Kompressionskammer für einen Zeitraum von 2-4 Minuten bis ein Druck im Bereich von 4000 bar bis 6000 bar erreicht ist,
c) Halten des Drucks in der besagten Kompressionskammer für einen Zeitraum von 2-4 Minuten bei einer Temperatur von ungefähr 4°C,
d) Dekomprimieren auf Atmosphärendruck, Öffnen der Kompressionskammer und Entnehmen des Molkereiprodukts.

2. Verfahren nach Anspruch 1, in weichem der Druck ungefähr 6000 bar beträgt.

3. Verfahren nach einem der Ansprüche 1 bis 2, in weichem die Folien oder Schalen aus einem Material gefertigt sind, das ausgewählt ist aus der Gruppe umfassend Polyethylen, Polyethylenterephthalat und Polystyrol, allein oder in mehrschichtigen Kombinationen, möglicherweise umfassend eine Aluminiumfolie bzw. ein Aluminiumblech.

4. Verfahren nach Anspruch 3, in welchem das besagte Material ein coextrudiertes, mehrschichtiges, durch Wärme schrumpfbares Polyolefin ist.

5. Verfahren nach Anspruch 4, in welchem das coextrudierte, mehrschichtige, durch Wärme schrumpfbare Polyolefinmaterial nahrungsmittelgeeignetes Kunststoffmaterial Cryovac^{®} BB 755 ist.

6. Molkereiprodukt, das durch das Verfahren nach einem der Ansprüche 1 bis 5 erhältlich ist, in welchem das Molkereiprodukt ein zusammengesetztes Produkt ist, das eine Kombination aus einem Frischkäse bzw. Rahmkäse und einem Blauschimmelkäse umfasst.

7. Molkereiprodukt nach Anspruch 6, in welchem das Molkereiprodukt ein zusammengesetztes Produkt ist, das eine Kombination aus Mascarpone und Gorgonzola umfasst.

## Revendications

1. Procédé pour pasteuriser des produits laitiers, dans lequel le tel produit laitier est un produit composite comprenant une association d'un fromage à la crème et d'un fromage bleu est dans lequel ledit produit laitier est emballé sous vide dans des films ou barquettes d'un matériau thermorétractable, comprenant les étapes suivantes de mise en oeuvre :
a) mise en place du produit laitier dans la chambre de compression remplie de fluide d'une machine pour traitement sous forte pression hydrostatique, et ensuite obturation hermétique de la chambre de compression,
b) élévation de la pression à l'intérieur de ladite chambre de compression pendant une période de temps de 2 à 4 minutes jusqu'à ce que soit atteinte une pression comprise dans l'intervalle de 4000 bars à 6000 bars,
c) maintien de la pression à l'intérieur de ladite chambre de compression pendant une période de temps de 2 à 4 minutes à une température d'approximativement 4°C,
d) décompression à la pression atmosphérique, ouverture de la chambre de compression et évacuation dudit produit laitier.

2. Procédé suivant la revendication 1, dans lequel ladite pression est approximativement égale à 6000 bars.

3. Procédé suivant l'une quelconque des revendications 1 est 2, dans lequel lesdits films ou lesdites barquettes sont constitués d'un matériau choisi dans le groupe consistant en le polyéthylène, le poly(téréphtalate d'éthylène) et le polystyrène, seul ou sous forme d'associations multi-couches, comprenant éventuellement une feuille d'aluminium.

4. Procédé suivant la revendication 3, dans lequel ledit matériau est une polyoléfine thermorétractable multicouche coextrudée.

5. Procédé suivant la revendication 4, dans lequel ledit matériau thermorétractable polyoléfinique multicouche coextrudé est la matière plastique de qualité alimentaire Cryovac® BB 755.

6. Produit laitier pouvant être obtenu par le procédé suivant l'une quelconque des revendications 1 à 5, ledit produit laitier étant un produit composite comprenant une association d'un fromage à la crème et d'un fromage bleu.

7. Produit laitier suivant la revendication 6, ledit produit laitier étant un produit composite comprenant une association de Mascarpone et de Gorgonzola.
